# FASCICULE DE BREVET EUROPEEN

(11) **EP 2 901 049 B1**
(45) Date de publication et mention de la délivrance du brevet: **29.03.2017**
(21) Numéro de dépôt: 13785494.9
(22) Date de dépôt: 26.09.2013
(51) Int. Cl.: F02M 26/70

(54) **VANNE DE CONTRÔLE MOTEUR À ÉTANCHÉITÉ AMÉLIORÉE**
MOTORSTEUERUNGSVENTIL MIT VERBESSERTER DICHTUNG
ENGINE CONTROL VALVE WITH IMPROVED SEALING

(30) Priorité: 28.09.2012 FR 1259179
(43) Date de publication de la demande: 05.08.2015
(73) Titulaire: Valeo Systèmes de Contrôle Moteur, 95800 Cergy (FR)
(72) Inventeur: HODEBOURG, Grégory, F-Sartrouville 78500 (FR); SOUBRIER, Stéphane, F-93100 Montreuil (FR)
(74) Mandataire: Garcia, Christine
(86) Numéro de dépôt international: PCT/FR2013/052284
(87) Numéro de publication internationale: WO 2014/049286

(56) Documents cités:
- FR-A1- 2 933 469
- FR-A1- 2 962 184

## Description

L'invention se rapporte à une vanne de contrôle moteur à étanchéité améliorée. Ce type de vanne peut, par exemple, équiper un circuit d'alimentation en gaz d'un moteur thermique de véhicule, pour réguler le débit des gaz EGR (Exhaust Gas Recirculation) dans une boucle permettant de ponctionner une partie des gaz d'échappement en sortie de moteur, pour les réinjecter en amont dudit moteur. Le principe de fonctionnement de ce type de vanne repose sur la rotation commandée d'un volet, pouvant passer d'une position d'ouverture complète pour laisser passer le fluide, à une position de fermeture pour bloquer ce passage. L'invention a pour objet une vanne de contrôle moteur à étanchéité améliorée.

Une vanne de contrôle moteur possède donc un volet, qui est monté pivotant sur un axe de rotation. Le volet peut comprendre une première partie et une deuxième partie séparées par l'axe de rotation. Lorsque ce volet se retrouve dans une position de fermeture, il vient au contact d'un joint solidaire du corps de la vanne, ledit joint assurant l'étanchéité de la vanne en agissant alors comme une butée de positionnement dudit volet. Plus spécifiquement, le joint est globalement plan, et est fixé dans le corps de la vanne, en étant inséré au niveau de son pourtour entre deux éléments de fonderie dudit corps. Le joint possède une ouverture, et lorsque le volet est en position de fermeture, la première partie du volet vient au contact de l'une des deux faces du joint pour obturer ladite ouverture, tandis que la deuxième partie dudit volet vient affleurer l'autre face dudit joint. Le volet est de faible épaisseur et possède généralement une forme sensiblement rectangulaire.

Dans un premier temps, pour des raisons liées à sa fabrication, le joint ne recouvrait que trois des quatre arêtes périphériques dudit volet, laissant subsister un passage potentiel pour les gaz au niveau de la quatrième arête du volet, qui est non recouverte par ledit joint. Ainsi, lorsque le volet est en position de fermeture contre le joint, ledit passage est susceptible de favoriser une fuite inopinée des gaz. Il en résulte une étanchéité assez médiocre de ladite vanne en configuration de fermeture.

Dans un deuxième temps, une solution pour remédier à cette étanchéité de mauvaise qualité a consisté à fabriquer un joint, soit en une seule partie, soit en deux parties, qui est suffisamment étendu pour recouvrir pleinement les quatre arêtes périphériques du volet, et ainsi limiter les sources de fuite.

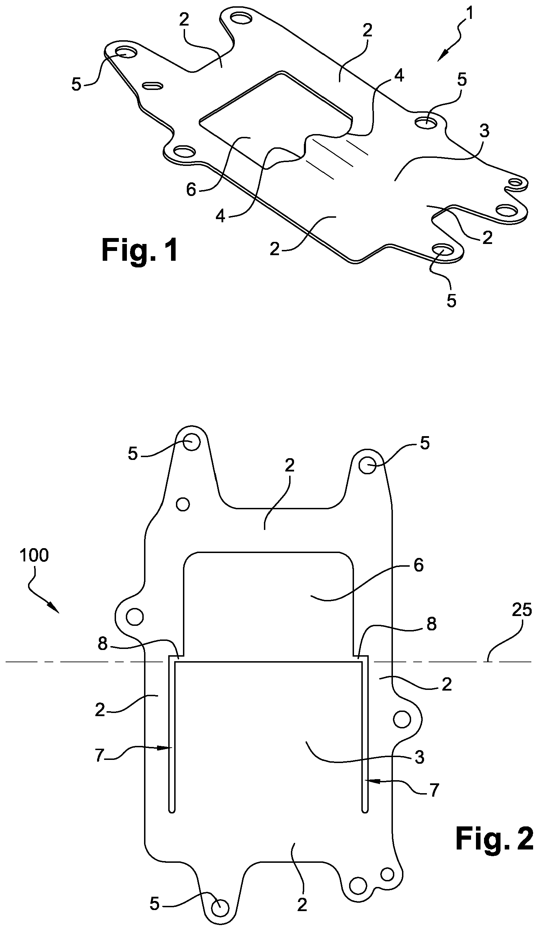

Or, en se référant à la figure 1, un problème régulièrement rencontré avec ce type de joint 1 étendu est qu'il est soumis à la fois à une pression et une température élevées de la part des gaz présents dans la vanne, et qu'il va donc avoir tendance à se déformer sous l'effet d'une dilatation thermique. Puisqu'il est inséré au niveau de son bord externe 2, entre deux éléments de fonderie, la déformation va essentiellement se porter sur la partie centrale 3 du joint 1, avec la création de creux 4 et/ou de bosses, susceptibles de constituer des passages de fuite pour les gaz situés dans la vanne. Plus spécifiquement, la partie centrale du joint comporte une portion pleine 3 et une ouverture 6, la déformation se produisant au niveau de ladite portion pleine 3. De plus, dans le cas où le joint 1 se déforme en créant des creux 4, il risque de constituer une butée de blocage artificielle pour le volet, et donc d'entraver son pivotement pour venir au contact dudit joint 1, afin d'assurer la fermeture de la vanne. Autrement dit, la déformation du joint 1 risque d'entraver le mécanisme de fonctionnement de la vanne et de créer des passages de fuite pour les gaz traversant ladite vanne.

La demande FR 2 933 469 divulgue une vanne comprenant un joint coopérant avec un volet pivotant dans un conduit. Le joint comprend des fentes qui sont disposées dans le conduit.

L'invention a pour objet, selon l'un de ses aspects, une vanne de contrôle moteur, présentant un corps délimitant un conduit interne et comprenant un volet monté pivotant par un axe du volet, le volet comprenant une première partie et étant apte à pivoter entre une position d'ouverture permettant le passage de gaz dans le conduit, et une position de fermeture pour laquelle le volet vient en contact avec un joint d'étanchéité, notamment plan, inséré entre deux éléments du corps de la vanne, ledit joint présentant un contour extérieur entourant extérieurement le contour extérieur du volet, le joint comprenant une ouverture et une portion pleine, ladite première partie venant obturer l'ouverture du joint lorsque le volet est dans une position de fermeture,
le joint comprenant au moins une fente ménagée dans la zone périphérique de la portion pleine et communiquant avec l'ouverture.

La fente étant ménagée dans la zone périphérique de la portion pleine du joint, elle peut encore être appelée « fente latérale ».

La fente peut comprendre une portion disposée hors du conduit interne. Cette portion est par exemple disposée entre les deux éléments du corps de la vanne, qui sont par exemple deux éléments de fonderie. Ladite portion de la fente n'est alors pas dans le flux gazeux circulant dans le conduit interne de la vanne de part et d'autre du volet, lorsque celui-ci n'est pas en position de fermeture.

Une vanne de contrôle moteur ci-dessus met en oeuvre un joint étendu recouvrant intégralement le volet, et configuré pour éviter une déformation par dilatation thermique de sa partie centrale, sous l'effet de la présence de gaz chauds et sous pression dans ladite vanne. De cette manière, cette vanne de contrôle moteur aura un fonctionnement satisfaisant, quelle que soit la température et la pression des gaz circulant à travers ladite vanne, sans risque de voir son volet se bloquer en rotation sous l'effet de la déformation du joint. De plus, puisque le joint conserve une bonne planéité, son interaction avec le volet va être optimisée, pour assurer une bonne étanchéité de la vanne en configuration de fermeture.

Chaque fente constitue un espace d'expansion, qui va permettre au joint de se dilater sous l'effet des gaz chauds présents dans la vanne, en venant occuper au moins partiellement ledit espace. Chaque fente va ainsi orienter la direction d'expansion du joint, en évitant que la déformation se porte sur sa partie centrale. Le joint peut demeurer plan durant toutes les phases d'utilisation de la vanne, sans occasionner de passages de fuite pour les gaz et sans risquer de bloquer la rotation du volet. Préférentiellement, chaque fente est issue d'un découpage au laser. De façon préférentielle, le joint d'étanchéité est rigoureusement plan sur toute sa surface, étant dépourvu d'une lèvre périphérique. De façon avantageuse, chaque fente est rectiligne et de largeur constante, s'étendant parallèlement au bord périphérique délimitant extérieurement la portion pleine.

Avantageusement, le joint comprend deux fentes parallèles, s'étendant chacune dans une portion périphérique de la portion pleine et communiquant chacune avec l'ouverture. Chacune de ces fentes peut être parallèle au bord périphérique délimitant extérieurement ladite zone périphérique de la portion pleine.

L'espace d'expansion prévu pour permettre la dilatation thermique du joint est double à travers la présence de ces deux fentes. De cette manière, le joint va pouvoir se dilater en deux endroits, matérialisés par les deux fentes, en diminuant le risque de voir sa partie centrale se déformer.

De façon préférentielle, chaque fente communique avec une extrémité de l'ouverture, considérée le long d'un axe séparant ladite ouverture et ladite portion pleine, chaque fente s'étendant perpendiculairement audit axe de séparation. Autrement dit, les deux fentes s'étendent dans la portion pleine du joint, selon une direction perpendiculaire à l'axe matérialisant la séparation entre l'ouverture et la portion pleine. De cette manière, l'ouverture globale du joint présente une partie compacte et rectangulaire, prolongée par deux fentes effilées.

De façon avantageuse, chaque fente possède une largeur comprise entre 0,2mm et 0,8mm. Ces valeurs de largeur permettent aux fentes d'absorber avec efficacité la dilatation du joint, tout en ne créant pas de fuites potentielles pour les gaz présents dans la vanne.

Préférentiellement, chaque fente possède une largeur de 0,5mm. Selon l'invention, le joint d'étanchéité est inséré entre deux joints de liaison recouvrant chacune des fentes, chacun desdits joints de liaison étant au contact d'un élément, notamment de fonderie, du corps. Ces deux joints de liaison contribuent à assurer une bonne étanchéité entre le joint d'étanchéité et les deux éléments du corps, en venant obturer les deux fentes du joint d'étanchéité. En effet, le risque de fuite au niveau des fentes insérées entre les deux éléments du corps n'étant pas négligeable, il est souhaitable d'ajouter deux joints de liaison pour bien isoler lesdites fentes et ainsi annuler ce risque.

De façon préférentielle, chaque joint de liaison est doté d'une lèvre périphérique. De cette manière, au moment du montage du joint d'étanchéité entre les éléments du corps, lesdits joints de liaison vont pouvoir encaisser les efforts de serrage entre lesdits éléments du corps en se déformant au niveau de leur lèvre périphérique, et vont contribuer à préserver l'intégrité structurelle du joint d'étanchéité. Autrement dit, la forme et la position du joint d'étanchéité ne vont pas fluctuer au moment du serrage entre les deux éléments du corps. Il en résulte que la position définitive du joint une fois fixé entre les éléments du corps va rigoureusement correspondre à son pré-positionnement idéal dans la vanne, avant son montage. Une telle maîtrise de montage du joint dans la vanne va permettre d'optimiser son interaction avec le volet pour assurer de bonnes conditions d'étanchéité lorsque ladite vanne va se retrouver dans une position de fermeture.

Avantageusement, chaque joint de liaison possède une ouverture dont les dimensions sont supérieures à celles de l'ouverture du joint d'étanchéité. En effet, puisque seule la zone périphérique de chaque joint de liaison va remplir une fonction spécifique, il est souhaitable de concevoir lesdits joints légers, peu encombrants et faciles à fabriquer. Des joints de liaison annulaires sont parfaitement adaptés pour remplir cette fonction, tout en respectant les exigences ci-avant évoquées.

Le volet peut comprendre une deuxième partie séparée de la première partie par l'axe du volet, ladite deuxième partie venant affleurer la portion pleine du joint lorsque le volet est dans une position de fermeture. La portion pleine du joint peut ainsi être disposée hors du flux gazeux parcourant le conduit interne.

De façon préférentielle, le volet comprend alors un renflement arrondi, placé entre la deuxième partie et l'axe de rotation, ledit renflement étant positionné de manière à demeurer au contact de la portion pleine du joint d'étanchéité, lorsque le volet pivote entre une position d'ouverture et une position de fermeture ou inversement. En effet, puisque le joint d'étanchéité est inséré au niveau de sa zone périphérique entre deux éléments du corps de la vanne, sa partie centrale constitue alors une zone de faiblesse structurelle, susceptible de se déformer sous l'effet de la température et de la pression élevées des gaz qui circulent dans ladite vanne, avec pour conséquence la création de passages de fuite pour lesdits gaz et un blocage éventuel en rotation dudit volet. Malgré la présence des fentes, qui vont constituer des espaces d'expansion pour le joint amené à se dilater thermiquement, le renflement vient compléter l'action desdites fentes en venant soutenir, de façon permanente, ladite portion pleine, en demeurant à son contact pendant le pivotement complet du volet, pour passer d'une position de fermeture à une position d'ouverture, ou inversement. Ce renflement agit donc comme un deuxième niveau de sécurité, pour contribuer à maintenir le joint dans un état de parfaite planéité lorsque le joint est rigoureusement plan sur toute sa surface. Un tel renflement garantit, en complément desdites fentes, un bon fonctionnement de la vanne ainsi qu'une bonne étanchéité de celle-ci, en évitant une déformation de la portion pleine du joint.

De façon avantageuse, le renflement s'étend parallèlement à l'axe de rotation. En effet, le renflement doit être conçu pour soutenir prioritairement la portion pleine du joint selon une direction parallèle à l'axe de rotation du volet, car le joint est le plus susceptible de se déformer suivant cette direction. Ce renflement peut être soit monobloc, soit constitué d'au moins deux parties séparées et alignées selon une direction parallèle à l'axe de rotation.

L'invention a encore pour objet, selon un autre de ses aspects, un ensemble de joints d'étanchéité pour la mise en oeuvre d'une vanne selon l'invention.

Une vanne selon l'invention présente l'avantage d'être performante en matière de fonctionnement, en empêchant de façon simple et judicieuse la déformation du joint, sans notamment avoir recours à un réaménagement en profondeur du corps de ladite vanne. Ladite vanne a de plus l'avantage de demeurer d'un encombrement constant par rapport aux vannes déjà existantes, puisque la ou les fentes pratiquées dans le joint résultent d'un enlèvement de matière. Une vanne selon l'invention possède enfin l'avantage de ne pas engendrer de surcoût, tout en possédant une fonctionnalité supplémentaire réalisée à travers l'existence des fentes.

On donne ci-après, une description détaillée d'un mode de réalisation préféré mais non limitatif d'une vanne selon l'invention, en se référant aux dessins annexés sur lesquels :
- La figure 1 est une vue filaire d'un joint déformé de l'état de la technique,
- La figure 2 est une vue filaire d'un joint d'une vanne selon l'invention, et
- La figure 3 est une vue éclatée d'un ensemble constitué par trois joints superposés et un volet, et mis en oeuvre dans une vanne selon l'invention.

Une vanne de contrôle moteur selon l'invention peut par exemple être une vanne EGR (de l'anglais Exhaust Gas Recirculation), régulant le débit des gaz dans une boucle reliant un circuit d'échappement à un circuit d'admission d'air d'un moteur thermique de véhicule.

En se référant à la figure 1, un joint 1 de l'état de la technique est en inox rigide, et est inséré au niveau de sa zone périphérique 2 entre deux éléments de fonderie en inox du corps de ladite vanne 1. Cette zone périphérique 2 comporte ainsi un certain nombre d'orifices 5, destinés à être traversés par des vis pour fixer le joint 1 entre lesdits éléments de fonderie. Ce joint 1 est plan, de forme sensiblement rectangulaire et de faible épaisseur, et possède une portion pleine 3 ainsi qu'une ouverture 6 de passage pour les gaz, ladite portion 3 et ladite ouverture 6 constituant la partie centrale dudit joint 1. L'ouverture 6 est rectangulaire, et a été pratiquée dans le joint 1, de sorte que son axe longitudinal soit perpendiculaire à l'axe longitudinal du joint 1 rectangulaire.

En se référant à la figure 2, un joint 100 d'une vanne selon l'invention se distingue d'un joint 1 d'une vanne selon l'état de la technique par le fait que l'ouverture 6 communique avec deux fentes 7 latérales, rectilignes et parallèles, s'étendant dans la zone périphérique 2 entourant la portion pleine 3. Plus précisément, chaque fente 7 est reliée via un segment 8 de faible longueur avec une extrémité de l'ouverture 6 considérée par rapport à un axe longitudinal 25 de ladite ouverture 6, et qui progresse vers le bord externe du joint 100 parallèlement audit axe longitudinal 25. Cet axe longitudinal 25 est l'axe qui sépare l'ouverture 6 et la portion pleine 3 du joint 100. Chaque premier segment 8 débouche dans une fente 7 rectiligne et perpendiculaire, qui s'étend selon un axe longitudinal du joint 100 dans une zone périphérique 2 longitudinal dudit joint 100 entourant la portion pleine 3. La distance séparant chaque fente 7 est supérieure à la longueur d'un grand coté de l'ouverture 6 rectangulaire. Chaque fente 7 et le premier segment 8 résultent par exemple d'un découpage au laser du joint 100 en inox, et possède une largeur constante de 0,5mm.

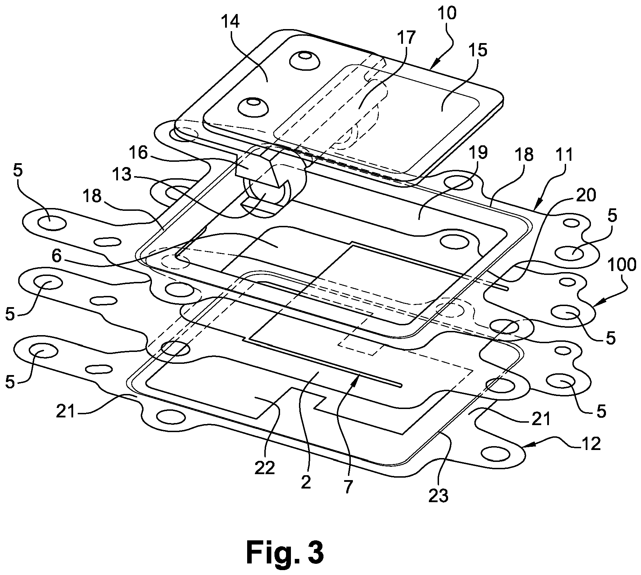

En se référant à la figure 3, une vanne de contrôle moteur selon l'invention met en oeuvre un volet 10 et trois joints 11, 12, 100 destinés à venir s'insérer entre deux éléments du corps de ladite vanne. Le volet 10 comprend un axe de rotation 13 ainsi qu'une première partie 14 et une deuxième partie 15, lesdites parties 14,15 étant placées de part et d'autre dudit axe 13, en continuité l'une de l'autre. Ces deux parties 14,15 sont de faible épaisseur et sont fixées rigidement l'une à l'autre. Le contour général du volet 10 délimité par ces deux parties 14,15 est sensiblement rectangulaire, chacune desdites parties 14,15 étant également de forme rectangulaire. L'axe de rotation 13 est décalé par rapport à un plan incluant les deux parties 14,15 et est situé à l'extrémité d'un bras de levier 16 s'étendant de façon sensiblement perpendiculaire audit plan, ledit bras 16 prenant naissance au niveau du plan d'interface fictif entre lesdites parties 14,15. Le terme «fictif» signifie qu'aucune marque particulière n'indique précisément l'emplacement du plan d'interface sur le volet 10 entre les deux parties 14,15. Le volet 10 comprend un renflement arrondi 17, placé sur le bras de levier 16, entre la deuxième partie 15 et l'axe de rotation 13, ledit renflement 17 s'étendant parallèlement audit axe 13. Le renflement 17 saille du bras de levier 16 parallèlement à la deuxième partie 15, et présente une section transversale délimitée par un segment rectiligne et un segment incurvé, dont les deux extrémités joignent les deux extrémités dudit segment rectiligne. Le segment rectiligne correspond à une embase plane et rectangulaire du renflement 17 par laquelle il est solidarisé au bras de levier 16, et le segment incurvé correspond à la surface externe arrondie dudit renflement 17. La longueur de ce renflement 17 est comprise entre 50% et 75% de la longueur totale de l'axe de rotation 13.

Une vanne selon l'invention comprend également trois joints 11,12,100, dont l'un représente le joint d'étanchéité 100 apte à coopérer avec le volet 10 pour assurer l'étanchéité de la vanne lorsque celle-ci se retrouve dans une position de fermeture, les deux autres joints 11,12 constituant des joints de liaison pour la fixation du joint d'étanchéité 100 dans la vanne. Le joint d'étanchéité 100 est conforme à celui qui est illustré à la figure 2, et présente donc la particularité d'être doté de deux fentes 7 parallèles, destinées à constituer des espaces d'extension pour le joint 100, qui est susceptible de subir une dilatation thermique sous l'effet de la présence de gaz chauds dans la vanne. L'un 11 des deux joints de liaison est annulaire, et est constitué essentiellement par une zone périphérique 18 délimitant une ouverture élargie 19 par rapport à celle 6 du joint de liaison 100. Cette zone annulaire périphérique 18 est dotée d'une lèvre 20 périphérique.

La zone périphérique 18 de ce joint de liaison 11 a la même géométrie et les mêmes dimensions que celles de la zone périphérique 2 du joint d'étanchéité 100. L'autre joint 12 de liaison est globalement annulaire, et est constitué par une zone périphérique 21 délimitant une ouverture profilée 22, dont les dimensions sont supérieures à celles de l'ouverture 6 du joint d'étanchéité 100. La zone périphérique 21 de cet autre joint 12 de liaison est dotée d'une lèvre périphérique 23, et a la même géométrie et les mêmes dimensions que celles de la zone périphérique 2 du joint d'étanchéité 100. Les zones périphériques 2, 18, 21 des trois joints 11, 12, 100 sont munies d'orifices 5 placés au même endroit, si bien que, lorsque lesdits trois joints 11, 12, 100 sont idéalement superposés, leurs zones périphériques 2, 18, 21 ainsi que leurs orifices 5 se correspondent parfaitement. Ces orifices 5 sont destinés à être traversées par des vis pour assurer la fixation des trois joints 11, 12, 100 entre les deux éléments du corps de la vanne.

Ces trois joints 11, 12, 100 sont placés entre les deux éléments du corps au niveau de leur zone périphérique 8, 18, 21 en étant idéalement superposés, le joint d'étanchéité 100 étant placé entre les deux joints 11,12 de liaison, et chacun desdits joints 11,12 de liaison étant au contact d'un élément du corps différent. Dans cette configuration de superposition, les deux fentes 7 du joint d'étanchéité 100 se retrouvent placées entre les zones périphériques 18,21 des deux joints de liaisons 11, 12. De cette manière, lesdites zones périphériques 18,21 isolent, de façon étanche, lesdites fentes 7 du conduit de passage des gaz dans la vanne, de sorte qu'elles ne puissent pas constituer des passages de fuite pour lesdits gaz.

Le volet 10 est mobile en rotation entre une position d'ouverture pour laquelle il laisse passer les gaz dans le conduit traversant la vanne, et une position de fermeture pour laquelle la première partie 14 du volet vient au contact d'une face du joint 100 pour obturer l'ouverture 6, et la deuxième partie 15 du volet 10 vient affleurer la face opposée dudit joint 100 au niveau de la portion pleine 3. Le volet 10 est commandé en rotation entre ces deux positions extrêmes et peut venir occuper une multiplicité de positions intermédiaires comprises entre lesdites positions extrêmes.

Les deux joints de liaison 11, 12 assurent une première fonction lors du montage du joint d'étanchéité 100 dans la vanne, en encaissant les efforts de serrage entre les deux éléments du corps, évitant au joint d'étanchéité 100 de se déformer. En effet, lesdits joints de liaison 11, 12 vont se déformer au niveau de leur lèvre périphérique 20, 23 lors de ce serrage, préservant ainsi l'intégrité structurelle du joint d'étanchéité 100.

Lesdits joints de liaison 11, 12 exercent également une deuxième fonction, qui est celle d'assurer une bonne étanchéité de la vanne, en isolant les deux fentes 7 du joint d'étanchéité 100, afin qu'elles ne constituent pas des passages de fuite pour les gaz.

Dans le cas où une vanne selon l'invention est amenée à gérer le débit de gaz chauds et sous pression, le joint d'étanchéité 100 va pouvoir se dilater thermiquement au niveau des deux espaces libres constitués par les deux fentes 7, sans subir de contrainte majeure. De cette manière, les deux fentes 7 vont contribuer à limiter, voire à annuler, toute déformation de la portion pleine 3 dudit joint d'étanchéité 100, qui pourrait constituer une source de fuites pour les gaz et/ou une source de blocage pour la rotation du volet 10. La protubérance 17 arrondie placée sur le bras de levier 16 du volet 10, complète l'action des fentes 7, en empêchant la déformation de la portion pleine 3 du joint 100 durant les différentes rotations du volet 10, pour passer d'une position d'ouverture à une position de fermeture ou inversement.

## Revendications

1. Vanne de contrôle moteur, présentant un corps délimitant un conduit interne et comprenant un volet (10) monté pivotant par un axe (13) du volet (10), le volet (10) comprenant une première partie (14) et étant apte à pivoter entre une position d'ouverture permettant le passage de gaz dans le conduit, et une position de fermeture pour laquelle le volet (10) vient en contact avec un joint (100) d'étanchéité, notamment plan, inséré entre deux éléments du corps de la vanne, ledit joint (100) présentant un contour extérieur entourant extérieurement le contour extérieur du volet (10), le joint (100) comprenant une ouverture (6) et une portion pleine (3), ladite première partie (14) venant obturer l'ouverture (6) du joint (100) lorsque le volet (10) est dans une position de fermeture, **caractérisée en ce que** le joint (100) comprend au moins une fente (7) ménagée dans la zone périphérique (2) de la portion pleine (3) et communiquant avec l'ouverture (6), ladite fente (7) comprenant une portion disposée hors du conduit interne,
le joint d'étanchéité (100) étant inséré entre deux joints de liaison (11,12) recouvrant chacune des fentes (7), et chacun desdits joints (11,12) de liaison étant au contact d'un élément du corps.

2. Vanne selon la revendication 1, la fente (7) s'étendant le long d'un bord périphérique délimitant extérieurement la zone périphérique (2) de la portion pleine (3).

3. Vanne selon la revendication 1 ou 2, comprenant deux fentes (7) parallèles, s'étendant chacune dans une zone périphérique (2) de la portion pleine (3) et communiquant chacune avec l'ouverture (6).

4. Vanne selon la revendication 2 ou 3, chaque fente (7) communiquant avec une extrémité de l'ouverture (6), considérée le long d'un axe (25) séparant ladite ouverture (6) et ladite portion pleine (3), chaque fente (7) s'étendant perpendiculairement audit axe (25) de séparation.

5. Vanne selon l'une quelconque des revendications 1 à 4, chaque fente (7) possédant une largeur comprise entre 0,2mm et 0,8mm.

6. Vanne selon la revendication 4, chaque fente (7) possédant une largeur de 0,5mm.

7. Vanne selon l'une quelconque des revendications 1 à 6, le joint d'étanchéité (100) étant rigoureusement plan sur toute sa surface.

8. Vanne selon l'une des revendications précédentes, chaque joint de liaison (11,12) étant doté d'une lèvre périphérique (20,23).

9. Vanne selon l'une des revendications précédentes, chaque joint de liaison (11,12) possédant une ouverture (19,22) dont les dimensions sont supérieures à celles de l'ouverture (6) du joint d'étanchéité (100).

10. Vanne selon la revendication 1, le volet (10) comprenant une deuxième partie (15) séparée de la première partie (14) par l'axe (13) du volet (10), ladite deuxième partie (15) venant affleurer la portion pleine (3) lorsque le volet est dans une position de fermeture.

11. Vanne selon la revendication 10, le volet (10) comprenant un renflement (17) arrondi, placé entre la deuxième partie (15) et l'axe de rotation (13), ledit renflement (17) étant positionné de manière à demeurer au contact de la portion pleine (3) du joint d'étanchéité (100) lorsque le volet (10) pivote entre une position d'ouverture et une position de fermeture ou inversement.

12. Ensemble de joints d'étanchéité (100, 11, 12) pour la mise en oeuvre d'une vanne de contrôle moteur conforme à l'une quelconque des revendications 1 à 11, l'ensemble de joints (100, 11, 12) comprenant un joint (100) présentant un contour extérieur apte à entourer extérieurement le contour extérieur du volet (10), le joint (100) comprenant une ouverture (6) et une portion pleine (3), ladite première partie (14) du volet (10) étant apte à obturer l'ouverture (6) du joint (1) lorsque le volet (10) est dans une position de fermeture, le joint (100) comprenant au moins une fente (7) ménagée dans la zone périphérique (2) de la portion pleine (3) et communiquant avec l'ouverture (6), ladite fente (7) comprenant une portion apte à être disposée hors du conduit interne de la vanne, l'ensemble de joint (100, 11, 12) comprenant de plus deux joints de liaison (11, 12) recouvrant chacune des fentes (7), le joint d'étanchéité (100) étant inséré entre lesdits deux joints de liaison (11, 12) et chacun desdits joints (11,12) de liaison étant apte à être au contact d'un élément du corps de la vanne.

## Patentansprüche

1. Motorsteuerungsventil, das einen Körper aufweist, der einen inneren Kanal begrenzt und eine Klappe (10) enthält, die um eine Achse (13) der Klappe (10) schwenkbar montiert ist, wobei die Klappe (10) einen ersten Teil (14) enthält und fähig ist, zwischen einer Öffnungsstellung, die den Durchgang von Gas durch den Kanal erlaubt, und einer Schließstellung zu schwenken, in der die Klappe (10) mit einer insbesondere ebenen Dichtung (100) in Kontakt kommt, die zwischen zwei Elemente des Körpers des Ventils eingefügt ist, wobei die Dichtung (100) einen Außenumfang aufweist, der den Außenumfang der Klappe (10) außen umgibt, wobei die Dichtung (100) eine Öffnung (6) und einen massiven Abschnitt (3) aufweist, wobei der erste Teil (14) die Öffnung (6) der Dichtung (100) abdeckt, wenn die Klappe (10) in einer Schließstellung ist,
**dadurch gekennzeichnet, dass** die Dichtung (100) mindestens einen Schlitz (7) enthält, der in der Umfangszone (2) des massiven Abschnitts (3) ausgespart ist und mit der Öffnung (6) in Verbindung steht, wobei der Schlitz (7) einen Abschnitt enthält, der außerhalb des inneren Kanals angeordnet ist,
wobei die Dichtung (100) zwischen zwei Verbindungsdichtungen (11, 12) eingefügt ist, die jeden der Schlitze (7) bedecken, und jede der Verbindungsdichtungen (11, 12) mit einem Element des Körpers in Kontakt steht.

2. Ventil nach Anspruch 1, wobei der Schlitz (7) sich entlang eines Umfangsrands erstreckt, der die Umfangszone (2) des massiven Abschnitts (3) außen begrenzt.

3. Ventil nach Anspruch 1 oder 2, das zwei parallele Schlitze (7) enthält, die sich je in einer Umfangszone (2) des massiven Abschnitts (3) erstrecken und je mit der Öffnung (6) in Verbindung stehen.

4. Ventil nach Anspruch 2 oder 3, wobei jeder Schlitz (7) mit einem Ende der Öffnung (6), gesehen entlang einer Achse (25), die die Öffnung (6) und den massiven Abschnitt (3) trennt, in Verbindung steht, wobei jeder Schlitz (7) sich lotrecht zur Trennachse (25) erstreckt.

5. Ventil nach einem der Ansprüche 1 bis 4, wobei jeder Schlitz (7) eine Breite zwischen 0,2 mm und 0,8 mm besitzt.

6. Ventil nach Anspruch 4, wobei jeder Schlitz (7) eine Breite von 0,5 mm besitzt.

7. Ventil nach einem der Ansprüche 1 bis 6, wobei die Dichtung (100) über ihre ganze Fläche rigoros eben ist.

8. Ventil nach einem der vorhergehenden Ansprüche, wobei jede Verbindungsdichtung (11, 12) mit einer Umfangslippe (20, 23) ausgestattet ist.

9. Ventil nach einem der vorhergehenden Ansprüche, wobei jede Verbindungsdichtung (11, 12) eine Öffnung (19, 22) besitzt, deren Abmessungen größer sind als diejenigen der Öffnung (6) der Dichtung (100).

10. Ventil nach Anspruch 1, wobei die Klappe (10) einen zweiten Teil (15) enthält, der vom ersten Teil (14) durch die Achse (13) der Klappe (10) getrennt ist, wobei der zweite Teil (15) den massiven Abschnitt (3) berührt, wenn die Klappe in einer Schließstellung ist.

11. Ventil nach Anspruch 10, wobei die Klappe (10) eine abgerundete Verdickung (17) enthält, die zwischen dem zweiten Teil (15) und der Drehachse (13) platziert ist, wobei die Verdickung (17) so positioniert ist, dass sie mit dem massiven Abschnitt (3) der Dichtung (100) in Kontakt bleibt, wenn die Klappe (10) zwischen einer Öffnungsstellung und einer Schließstellung oder umgekehrt schwenkt.

12. Gruppe von Dichtungen (100, 11, 12) zur Verwendung eines Motorsteuerungsventils nach einem der Ansprüche 1 bis 11, wobei die Gruppe von Dichtungen (100, 11, 12) eine Dichtung (100) mit einem Außenumfang enthält, der den Außenumfang der Klappe (10) außen umgeben kann, wobei die Dichtung (100) eine Öffnung (6) und einen massiven Abschnitt (3) enthält, wobei der erste Teil (14) der Klappe (10) die Öffnung (6) der Dichtung (1) abdecken kann, wenn die Klappe (10) in einer Schließstellung ist, wobei die Dichtung (100) mindestens einen Schlitz (7) enthält, der in der Umfangszone (2) des massiven Abschnitts (3) ausgespart ist und mit der Öffnung (6) in Verbindung steht, wobei der Schlitz (7) einen Abschnitt enthält, der außerhalb des inneren Kanals des Ventils angeordnet werden kann, wobei die Dichtungsgruppe (100, 11, 12) außerdem zwei Verbindungsdichtungen (11, 12) enthält, die jeden der Schlitze (7) bedecken, wobei die Dichtung (100) zwischen die zwei Verbindungsdichtungen (11, 12) eingefügt ist, und jede der Verbindungsdichtungen (11, 12) mit einem Element des Körpers des Ventils in Verbindung stehen kann.

## Claims

1. Engine control valve having a body delimiting an internal duct and comprising a flap (10) pivotably mounted by a pin (13) of the flap (10), the flap (10) comprising a first part (14) and being capable of pivoting between an open position permitting the passage of gas into the duct, and a closed position in which the flap (10) comes into contact with a seal (100), in particular a flat seal, inserted between two elements of the body of the valve, said seal (100) having an external contour externally surrounding the external contour of the flap (10), the seal (100) comprising an opening (6) and a solid portion (3), said first part (14) sealing the opening (6) of the seal (100) when the flap (10) is in a closed position,
**characterized in that** the seal (100) comprises at least one slot (7) formed in the peripheral zone (2) of the solid portion (3) and communicating with the opening (6), said slot (7) comprising a portion arranged outside the internal duct,
the seal (100) being inserted between two connecting seals (11, 12) covering each of the slots (7) and each of said connecting seals (11, 12) being in contact with an element of the body.

2. Valve according to Claim 1, the slot (7) extending along a peripheral edge externally delimiting the peripheral zone (2) of the solid portion (3).

3. Valve according to Claim 1 or 2, comprising two parallel slots (7) each extending into a peripheral zone (2) of the solid portion (3) and each communicating with the opening (6).

4. Valve according to Claim 2 or 3, each slot (7) communicating with an end of the opening (6), viewed along an axis (25) separating said opening (6) and said solid portion (3), each slot (7) extending perpendicular to said axis (25) of separation.

5. Valve according to any one of Claims 1 to 4, each slot (7) having a width ranging between 0.2 mm and 0.8 mm.

6. Valve according to Claim 4, each slot (7) having a width of 0.5 mm.

7. Valve according to any one of Claims 1 to 6, the seal (100) being strictly flat over its entire surface.

8. Valve according to any one of the preceding claims, each connecting seal (11, 12) being provided with a peripheral lip (20, 23).

9. Valve according to any one of the preceding claims, each connecting seal (11, 12) having an opening (19, 22), the dimensions thereof being greater than those of the opening (6) of the seal (100).

10. Valve according to claim 1, the flap (10) comprising a second part (15) separated from the first part (14) by the pin (13) of the flap (10), said second part (15) being flush with the solid portion (3) when the flap is in a closed position.

11. Valve according to claim 10, the flap (10) comprising a rounded bulged portion (17) placed between the second part (15) and the pivot pin (13), said bulged portion (17) being positioned so as to remain in contact with the solid portion (3) of the seal (100) when the flap (10) pivots between an open position and a closed position or vice versa.

12. Assembly of seals (100, 11, 12) for the use of an engine control valve according to any one of Claims 1 to 11, the assembly of seals (100, 11, 12) comprising a seal (100) having an external contour capable of externally surrounding the external contour of the flap (10), the seal (100) comprising an opening (6) and a solid portion (3), said first part (14) of the flap (10) being capable of sealing the opening (6) of the seal (1) when the flap (10) is in a closed position, the seal (100) comprises at least one slot (7) formed in the peripheral zone (2) of the solid portion (3) and communicating with the opening (6), said slot (7) comprising a portion capable of being arranged outside the internal duct of the valve, the assembly of seals (100, 11, 12) additionally comprising two connecting seals (11, 12) covering each of the slots (7), the seal (100) being inserted between said two connecting seals (11, 12) and each of said connecting seals (11, 12) being capable of being in contact with an element of the body of the valve.
